# EUROPEAN PATENT APPLICATION

(11) **EP 4 637 113 A1**
(43) Date of publication of application: **22.10.2025**
(21) Application number: 24170909.6
(22) Date of filing: 17.04.2024
(51) Int. Cl.: H04L 67/10, G06N 20/00

(54) **METHOD FOR TRANSMITTING AND/OR USING A USER EQUIPMENT MACHINE-LEARNING LOCATION SELECTION POLICY INFORMATION, USER EQUIPMENT, SYSTEM OR TELECOMMUNICATIONS NETWORK, PROGRAM AND COMPUTER-READABLE MEDIUM**

(71) Applicant: Deutsche Telekom AG, 53113 Bonn (DE)
(72) Inventor: BLICKER, Stephan, 53343 Wachtberg (DE)
(74) Representative: Schwöbel, Thilo K.

(57) **Abstract**

The invention relates to a method for transmitting and/or using a user equipment machine-learning location selection policy information when operating a user equipment, or when operating a user equipment connected to a telecommunications network, wherein the user equipment comprises a user equipment machine-learning agent, the user equipment machine-learning agent being configured to interact with a machine-learning server entity in order to perform machine-learning operations involving the machine-learning server entity solely or involving the user equipment solely or involving both the machine-learning server entity and the user equipment,
wherein, in order to transmit and/or in order to use a specific user equipment machine-learning location selection policy information, the method comprises the following steps:
-- in a first step, the user equipment comprises or receives the specific user equipment machine-learning location selection policy information to be evaluated and/or to be applied by the user equipment machine-learning agent,
-- in a second step, the user equipment machine-learning agent and the machine-learning server entity interact in accordance with a machine-learning interface for control plane data and user plane data.

## Description

### BACKGROUND

The present invention relates a method for transmitting and/or using a user equipment machine-learning location selection policy information when operating a user equipment, or when operating a user equipment connected to a telecommunications network, wherein the user equipment comprises a user equipment machine-learning agent, the user equipment machine-learning agent being configured to interact with a machine-learning server entity in order to perform machine-learning operations involving the machine-learning server entity solely or involving both the machine-learning server entity and the user equipment.

Furthermore, the present invention relates to a user equipment for receiving and/or using a user equipment machine-learning location selection policy information when being operated, or when being operated in connection to a telecommunications network, wherein the user equipment comprises a user equipment machine-learning agent, the user equipment machine-learning agent being configured to interact with a machine-learning server entity in order to perform machine-learning operations involving the machine-learning server entity solely or involving both the machine-learning server entity and the user equipment.

Additionally, the present invention relates to a system or to a telecommunications network for transmitting and/or using a user equipment machine-learning location selection policy information when operating a user equipment, or when operating a user equipment connected to a telecommunications network, wherein the user equipment comprises a user equipment machine-learning agent, the user equipment machine-learning agent being configured to interact with a machine-learning server entity in order to perform machine-learning operations involving the machine-learning server entity solely or involving both the machine-learning server entity and the user equipment.

Furthermore, the present invention relates to a program and to a computer-readable medium for using a user equipment with the telecommunications network according to the inventive method.

In conventionally known telecommunications networks, it is known to use fifth generation ("5G") cellular systems, also referred to as New Radio (NR). New Radio is developed for a maximum flexibility to support multiple and substantially different use cases.

At a high level, the 5G system (5GS) consists of an access network and a core network. The access network provides user equipments with connectivity to the core network, e.g., via base stations or base station entities such as gNBs or ng-eNBs. The core network typically includes a variety of network functions or services (NFs) that provide a wide range of different functionalities such as session management, connection management, charging, authentication, etc.

Machine learning (ML) is a type of artificial intelligence (Al) that focuses on the use of data and algorithms to imitate the way that humans learn, gradually improving its accuracy. ML algorithms build models based on sample (or "training") data, with the models being used subsequently to make predictions or decisions. ML algorithms can be used in a wide variety of applications (e.g., medicine, speech recognition, etc.) in which it is difficult or unfeasible to develop conventional algorithms to perform the needed tasks. AI/ML is being used in a range of application domains across industry sectors including mobile communications. For example, user equipment (UEs, e.g., smartphones, automotive, robots) are increasingly using AI/ML models to enable applications such as speech recognition, image recognition, video processing, etc. Even so, AI/ML-based mobile applications are increasingly consuming more processing resources, memory, and stored energy (e.g., battery).

Thus, it is advantageous to transfer at least a part of artificial intelligence/machine-learning-related tasks or processing - such as, e.g., artificial intelligence/machine-learning model inference processing - from the user equipments to public or private clouds or to the machine-learning edge cloud, or to provide at least the possibility thereof in view of a higher degree of flexibility and/or in view of a more fine grained applicable granularity in deciding which artificial intelligence/machine-learning task or processing is performed by which entity.

Furthermore, there might be other requirements - such as user privacy, application responsiveness or latency, etc. - that either dictate that certain parts of the artificial intelligence/machine-learning operations may remain on the user equipment, or that, at least, make it desirable to at least provide the possibility that certain parts of the artificial intelligence/machine-learning operations remain on the user equipment.

Hence, a higher degree of flexibility and/or controllability - especially by the network operator and/or the network provider of a telecommunications network - regarding how and by whom (i.e. by which entity) certain artificial intelligence/machine-learning tasks are actually performed is desirable, especially regarding a potential split of artificial intelligence/machine-learning operations (e.g., inference, learning, control, etc.) between different entities (especially between the user equipment and a network (or edge network) for artificial intelligence/machine-learning applications).

In this context, it is especially desirable to be able to realize a higher degree of flexibility regarding performing artificial intelligence/machine-learning tasks in view of data transmission and/or available energy (especially at user equipments): Typically, while the uplink and/or downlink data rates are often limited in many telecommunications networks - especially in mobile telecommunications networks having an air interface -, the success of artificial intelligence/machine-learning models and their increasing memory as well as energy consumption is somehow in contradiction with the limited (data transmission and/or energy or data storage) capacities of mobile systems.

### SUMMARY

An object of the present invention is to provide a technically simple, effective and cost effective solution for transmitting and/or using a user equipment with a telecommunications network, wherein the user equipment comprises a user equipment machine-learning agent that is configured to interact with a machine-learning server entity in order to perform machine-learning operations involving the machine-learning server entity solely or involving the user equipment solely or involving both the machine-learning server entity and the user equipment, wherein a higher degree of flexibility is able to be provided regarding actually conducting artificial intelligence/machine-learning tasks. A further object of the present invention is to provide a corresponding user equipment, system or telecommunications network, and a corresponding program and computer-readable medium.

The object of the present invention is achieved by a method for transmitting and/or using a user equipment machine-learning location selection policy information when operating a user equipment, or when operating a user equipment connected to a telecommunications network,
wherein the user equipment comprises a user equipment machine-learning agent, the user equipment machine-learning agent being configured to interact with a machine-learning server entity in order to perform machine-learning operations involving the machine-learning server entity solely or involving the user equipment solely or involving both the machine-learning server entity and the user equipment,
wherein, in order to transmit and/or in order to use a specific user equipment machine-learning location selection policy information, the method comprises the following steps:
   - in a first step, the user equipment comprises or receives the specific user equipment machine-learning location selection policy information to be evaluated and/or to be applied by the user equipment machine-learning agent,
   - in a second step, the user equipment machine-learning agent and the machine-learning server entity interact in accordance with a machine-learning interface for control plane data and user plane data.

According to the present invention, it is advantageously possible to adapt the behavior regarding conducting artificial intelligence/machine-learning tasks in a very flexible manner and in a manner that the operator of the telecommunications network is able to influence on a very low layer, especially on protocol layers of the telecommunications network.
Especially, it is thereby advantageously possible to provide for a much more fine-grained and situation-adapted implementation of artificial intelligence/machine-learning operations.

According to the present invention, it is assumed that the user equipment is used with the telecommunications network, i.e. it is connected to the user equipment, and, while being connected to the telecommunications network, the user equipment either requests artificial intelligence/machine-learning tasks to be performed, or the user equipment is requested (by means of using the user equipment machine-learning location selection policy information) to participate or to be involved in artificial intelligence/machine-learning tasks.

According to the present invention, it is furthermore advantageously possible and preferred that the machine-learning server entity is part of and/or interacts with an artificial intelligence or machine-learning edge cloud system.

It is thereby advantageously possible to realize and implement the inventive method in a comparatively simple and efficient manner.

According to the present invention, it is furthermore advantageously possible and preferred that the specific user equipment machine-learning location selection policy information is transmitted using non-access stratum communication between, on the one hand, the telecommunications network, especially the policy and charging function and/or the access and mobility management function of the telecommunications network, and, on the other hand, the user equipment or the user equipment machine-learning agent.

It is thereby advantageously possible to realize and implement the inventive method in a comparatively simple and efficient manner. Especially, it is advantageously possible that the user equipment machine-learning location selection policy information, or its content, is informed by a subscription information or subscription-related information of the corresponding to the subscription the user equipment has with the telecommunications network.

Furthermore, it is advantageously possible and preferred according to the present invention that the machine-learning interface provides one out of the following functions or functionalities or provides a plurality of the following functions or functionalities:
-- authentication of the user equipment against the machine-learning server entity and/or against the artificial intelligence or machine-learning edge cloud system;
-- authentication of the user equipment machine-learning agent against the machine-learning server entity and/or against the artificial intelligence or machine-learning edge cloud system;
-- data control plane functionalities, especially involving the handling of at least one out of the following:
   -- use case type identifier information,
   -- transaction identifier information,
   -- meta data about the data transfer,
   -- meta data about the data contens,
   -- machine-learning model specifics;
-- data user plane functionalities, especially involving the transfer of user equipment training data to the machine-learning server entity and/or to the artificial intelligence or machine-learning edge cloud system, and especially involving the handling of at least one out of the following:
   -- bearer setup and transfer according to key performance indicators,
   -- trained model, model meta data retrieval, especially hyperparameter information and/or gradient information.

It is thereby advantageously possible to efficiently realize and implement the inventive method in a comparatively simple and flexible manner.

Furthermore, it is advantageously possible and preferred according to the present invention that the specific user equipment machine-learning location selection policy information is applied, or not applied, by the user equipment or by the user equipment machine-learning agent, depending on the content of the specific user equipment machine-learning location selection policy information.

It is thereby advantageously possible to realize and implement the inventive method in a comparatively simple and efficient manner.

Furthermore, it is advantageously possible and preferred according to the present invention that the specific user equipment machine-learning location selection policy information determines the interaction between the user equipment machine-learning agent and the machine-learning server entity, wherein at least parts of the specific user equipment machine-learning location selection policy information, or of its contents, are stored in or provisioned by the policy and charging function of the telecommunications network.

It is thereby advantageously possible to realize and implement the inventive method in a comparatively simple and efficient manner.

Furthermore, it is advantageously possible and preferred according to the present invention that the content of the specific user equipment machine-learning location selection policy information and/or the interaction of the user equipment machine-learning agent and the machine-learning server entity refers to or influences protocol layers of the telecommunications network.

It is thereby advantageously possible to realize and implement the inventive method in a comparatively simple and efficient manner.

Furthermore, the present invention relates to a user equipment for receiving and/or using a user equipment machine-learning location selection policy information when being operated, or when being operated in connection to a telecommunications network,
wherein the user equipment comprises a user equipment machine-learning agent, the user equipment machine-learning agent being configured to interact with a machine-learning server entity in order to perform machine-learning operations involving the machine-learning server entity solely or involving the user equipment solely or involving both the machine-learning server entity and the user equipment,
wherein, in order to receive and/or in order to use a specific user equipment machine-learning location selection policy information, the user equipment is configured such that:

-- the user equipment comprises or receives the specific user equipment machine-learning location selection policy information to be evaluated and/or to be applied by the user equipment machine-learning agent,
-- the user equipment machine-learning agent interacts with the machine-learning server entity in accordance with a machine-learning interface for control plane data and user plane data.

Furthermore, the present invention relates to a system or telecommunications network for transmitting and/or using a user equipment machine-learning location selection policy information when operating a user equipment, or when operating a user equipment connected to a telecommunications network, wherein the user equipment comprises a user equipment machine-learning agent, the user equipment machine-learning agent being configured to interact with a machine-learning server entity in order to perform machine-learning operations involving the machine-learning server entity solely or involving the user equipment solely or involving both the machine-learning server entity and the user equipment, wherein, in order to transmit and/or in order to use a specific user equipment machine-learning location selection policy information, the system or telecommunications network is configured such that:
-- the user equipment comprises or receives the specific user equipment machine-learning location selection policy information to be evaluated and/or to be applied by the user equipment machine-learning agent,
-- the user equipment machine-learning agent and the machine-learning server entity interact in accordance with a machine-learning interface for control plane data and user plane data.

Additionally, the present invention relates to a program comprising a computer readable program code which, when executed on a computer and/or on a user equipment and/or on a user equipment machine-learning agent and/or on a machine-learning server entity and/or on a network node of a telecommunications network, or in part on the user equipment and/or in part on the user equipment machine-learning agent and/or in part on the machine-learning server entity and/or in part on the network node of a telecommunications network, causes the computer and/or the user equipment and/or the user equipment machine-learning agent and/or the machine-learning server entity and/or the network node of a telecommunications network to perform the inventive method.

Additionally, the present invention relates to a computer-readable medium comprising instructions which when executed on a computer and/or on a user equipment and/or on a user equipment machine-learning agent and/or on a machine-learning server entity and/or on a network node of a telecommunications network, or in part on the user equipment and/or in part on the user equipment machine-learning agent and/or in part on the machine-learning server entity and/or in part on the network node of a telecommunications network, causes the computer and/or the user equipment and/or the user equipment machine-learning agent and/or the machine-learning server entity and/or the network node of a telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, wherein the core network typically comprises a number of network functions or services, and wherein the user equipment comprises user equipment machine-learning location selection policy information, and wherein the telecommunications network is connected to or comprises a machine-learning server entity.
Figure 2 schematically illustrates the transmission of user equipment machine-learning location selection policy information towards the user equipment.
Figures 3 and 4 schematically illustrate different examples of the interaction between the user equipment and the machine-learning server entity.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

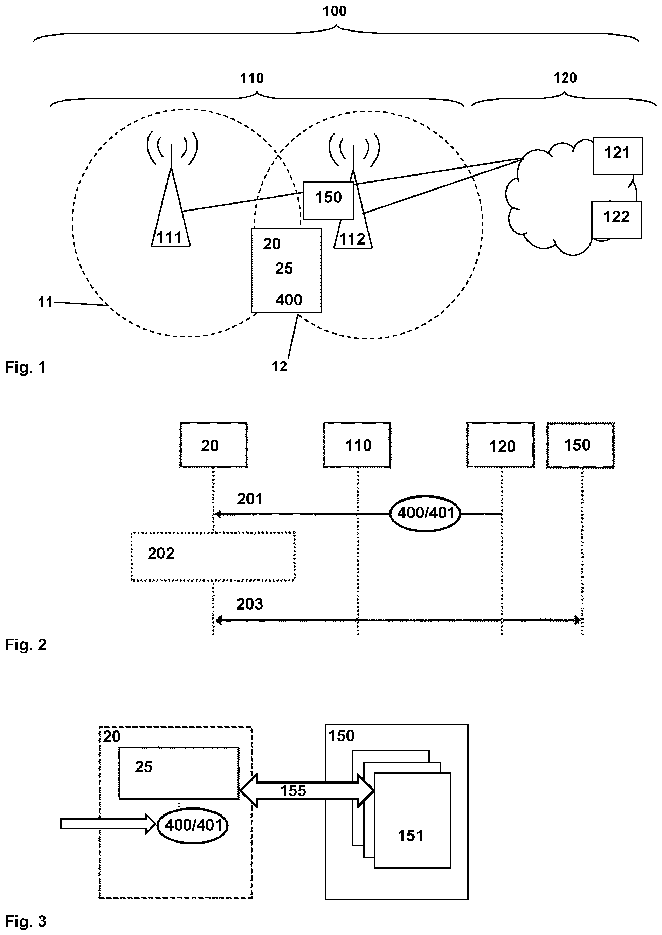

In Figure 1, a telecommunications network 100 comprising an access network 110, and a core network 120 is schematically shown. The telecommunications network 100, especially the core network 120, typically comprises a number of network functions or services; in the exemplary situation or scenario shown in Figure 1, especially a network function or service of the type of a policy and charging function 121 and a network function or service of the type of an access and mobility management function 122 is schematically shown.

The access network 110 comprises a plurality of radio cells 11, 12. In the exemplary situation or scenario shown in Figure 1, a first base station entity 111 generates (or, is associated with, or spans) the first radio cell 11, and a second base station entity 112 generates (or, is associated with or spans) the second radio cell 12. In the exemplary situation shown in Figure 1, the user equipment 20 is connected to the telecommunications network 100 via a radio interface to the first base station entity 111 and/or to the second base station entity 112. The user equipment 20 is typically, but not necessarily, mobile i.e. able to move with respect to the (typically, but not necessarily, static) radio cells 11, 12 or corresponding base station entities 111, 112 of the access network 110.

According to the present invention, the telecommunications network 100 - i.e. the access network 110 and/or the core network 120 - is connected to or comprises a machine-learning server entity 150. In the exemplary situation or scenario represented in Figure 1, the machine-learning server entity 150 is shown as being part of (or connected to) the access network 110 - especially part of (or connected to) one of the base station entities, i.e. - in the example represented - the first base station entity 111 or the second base station entity 112. Especially, it might be the case (according to other embodiments of the present invention - not represented in Figure 1) that a machine-learning server entity 150 (or an instance thereof) is present at (or part of) each one (or, at least, most) of the base station entities 111, 112 of the access network 110.

Generally according to the present invention, the user equipment 20 typically comprises a user equipment machine-learning agent 25 (schematically depicted, in Figure 1, as part of the user equipment 20).

The user equipment machine-learning agent 25 might be - according to a preferred embodiment of the present invention - an application typically running on the user equipment 20, i.e. the user equipment 20 typically runs or executes an operating system (such as a mobile (devices) operating system, e.g., android, iOS, iPadOS, etc.), and the application is running on the operating system.

However, alternatively and according to another (and even still more) preferred embodiment of the present invention, the application is realized as a lower-level application that might, rather, not be called as running 'on' the operating system of the user equipment but rather as a part thereof. Especially, according to such a preferred embodiment of the present invention, the application or the user equipment machine-learning agent 25 is deeper embedded in the user equipment 20 (and less easily dissociable from the user equipment 20 - especially not by simply deinstalling a corresponding application, at least not on a level of access to the user equipment and/or of its software or hardware components that corresponds to the level of access of an end-user or (regular or general) customer of the telecommunications network). Hence, especially, the user equipment machine-learning agent 25 is preferably implemented as part of the operating system of the user equipment 20 or a part thereof, especially as part of the operating system of, e.g., the subscriber identity module or another trusted component of the user equipment 20 (i.e. especially more trusted, or modification-resistant compared to the general parts or software components of the user equipment 20).

According to the present invention, the user equipment machine-learning agent 25 - and, hence, the user equipment 20 - is configured to interact with the machine-learning server entity 150 the telecommunications network 100 is connected to or that the telecommunications network 100 comprises. For the sake of simplicity, in the schematic representation of Figure 1 only one machine-learning server entity 150 (or instance of a machine-learning server entity 150) is schematically shown; in case that a plurality of such machine-learning server entities 150 (or instances thereof) are present and/or accessible by the user equipment 20, it might well be the case that the user equipment 20 interacts not only with one such machine-learning server entity 150 but with a plurality thereof. However, for the purpose of explaining the present invention, the interaction between the user equipment 20 and the machine-learning server entity 150 is mainly described using the singular of the machine-learning server entity 150.

According to the present invention, the interaction between the user equipment 20 (or, rather, its user equipment machine-learning agent 25) with the machine-learning server entity 150 is realized in order to perform machine-learning operations involving the machine-learning server entity 150 and/or the user equipment 20:
Especially, the machine-learning server entity 150 might perform the machine-learning (or artificial intelligence/machine-learning) operations solely (i.e. only, or, at least, vastly predominantly the actual machine-learning tasks are performed by the machine-learning server entity 150 - and not by the user equipment 20);
alternatively, the user equipment 20 might perform the machine-learning (or artificial intelligence/machine-learning) operations more or less solely (i.e. only, or, at least, vastly predominantly the actual machine-learning tasks are performed by the user equipment 20 or on the (hardware of the) user equipment 20 - and not on, or by, the machine-learning server entity 150);
Furthermore alternatively, the machine-learning (or artificial intelligence/machine-learning) operations might be performed by the machine-learning server entity 150 and by the user equipment 20, i.e. involving both the machine-learning server entity 150 and the user equipment 20 (perhaps in varying proportions but nevertheless in common).

According to the present invention, the user equipment 20 (or, rather, the user equipment machine-learning agent 25) interact with the machine-learning server entity 150 (or with the plurality of machine-learning server entities 150) using a machine-learning interface (not specifically shown, in Figure 1, by means of a reference sign - cf. reference sign 155 in Figure 3).

According to the present invention, a user equipment machine-learning location selection policy information 400 is used. Such user equipment machine-learning location selection policy information 400 is schematically shown, in Figure 1, as part of the user equipment 20. According to one alternative embodiment of the present invention, this indicates that the user equipment 20 comprises the user equipment machine-learning location selection policy 400 (especially already initially). According to a further alternative embodiment of the present invention, the user equipment machine-learning location selection policy 400 might be received by the user equipment 20, especially by (or via) the access network 110 and/or the core network 120 of the telecommunications network 100.

Figure 2 schematically illustrates an example of the transmission of such user equipment machine-learning location selection policy information 400 towards the user equipment 20. The present invention relates to the principle of using user equipment machine-learning location selection policy information 400. Figure 2 is intended to also specifically show that a specific (or specific piece of) user equipment machine-learning location selection policy information 401 is transmitted to the user equipment 20 and/or used by the user equipment 20. However, the specific user equipment machine-learning location selection policy information 401 also corresponds to (or is) a user equipment machine-learning location selection policy information 400.

According to the present invention, in order to transmit (to a specifically considered user equipment 20) and/or in order to use the specific user equipment machine-learning location selection policy information 401 (by that specifically considered user equipment 20), the method comprises the steps of the user equipment (20) either comprising or receiving the specific user equipment machine-learning location selection policy information 401. The specific user equipment machine-learning location selection policy information 401 is to be evaluated by and/or to be applied by the user equipment machine-learning agent 25. Furthermore, the user equipment machine-learning agent 25 and the machine-learning server entity 150 interact in accordance with the machine-learning interface (cf. reference sign 155 in Figure 3) for control plane data and/or for user plane data.

Specifically, Figure 2 especially illustrates the transmission of the specific user equipment machine-learning location selection policy information 401 to the user equipment 20: In a first processing step 201, the user equipment 20 (or, rather, the user equipment machine-learning agent 25) receives, from the telecommunications network 100 - typically (but not necessarily) from the core network 120, or from a network function or service of the core network 120 - the specific user equipment machine-learning location selection policy information 401 (i.e. the user equipment machine-learning location selection policy information 400). In a second processing step 202, the machine-learning location selection policy information 401 is evaluated, especially taking into account the capabilities of the user equipment 20 and/or the specific situation and/or network condition of the user equipment 20 and/or of its environment, e.g. the density of other user equipments (per surface unit) in the vicinity of the user equipment 20.

In a third processing step 203, the user equipment machine-learning agent 25 and the machine-learning server entity 150 interact in accordance with the machine-learning interface (cf. reference sign 155 in Figure 3) for control plane data and user plane data.

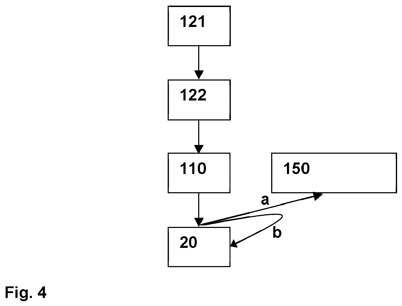

Figures 3 and 4 schematically illustrate different examples of the interaction between the user equipment 20 (i.e. the user equipment machine-learning agent 25) and the machine-learning server entity 150. Especially, Figure 3 illustrates the user equipment 20 comprising the user equipment machine-learning agent 25. Furthermore, Figure 3 shows the machine-learning server entity 150. In the specific representation of Figure 3, the machine-learning server entity 150 comprises a plurality of machine-learning (or artificial intelligence/machine-learning) transactions or transaction entities; the first one thereof is exemplarily denoted by means of reference sign 151; however other such machine-learning (or artificial intelligence/machine-learning) transactions or transaction entities are not depicted with a (separate) reference sign.
Especially, Figure 3 shows the user equipment machine-learning location selection policy information 400 (or the specific user equipment machine-learning location selection policy information 401) being transmitted (or having been transmitted) to the user equipment 20 (or to the user equipment machine-learning agent 25).

Furthermore, between the user equipment 20 (or, rather, the user equipment machine-learning agent 25) on the one hand, and the machine-learning server entity 150 on the other hand, the machine-learning interface 155 (especially for control plane data and user plane data) is schematically represented in Figure 3.

Specifically, Figure 4 shows an exemplary situation where the policy and charging function 121, i.e. the corresponding network function or service, (of the core network 120) communicates (or interacts) with the access and mobility management function 122, i.e. likewise the corresponding network function or service, (of the core network 120). The access and mobility management function 122 exemplarily transmits the (specific) user equipment machine-learning location selection policy information 400/401 - via the access network 110 (especially using non-access stratum messages) to the user equipment 20, and the user equipment 20 interacts (as a result thereof) with the machine-learning server entity 150 in order to perform or to realize artificial intelligence/machine-learning tasks or operations with a user equipment behaviour depending on the policy, i.e. the content of the (specific) user equipment machine-learning location selection policy information 400/401. Especially, the communication between the policy and charging function 121 and the access and mobility management function 122 involves the policy to apply (regarding artificial intelligence/machine-learning tasks), e.g. being dependent on the device type (e.g. of the user equipment 20), whether the artificial intelligence/machine-learning task is operator-controlled, user equipment-controlled, or requested (or controlled) by an over-the-top operator (OTT-operator).

The (specific) user equipment machine-learning location selection policy information 400/401 might be applied, e.g., involving training and/or inference by the machine-learning server entity 150 - represented as "a" in Figure 4; typically in an edge cloud of the telecommunications network operator -, or involving local training and/or inference by the user equipment 20 - represented as "b" in Figure 4, or, alternatively, involving a mixture of training and/or inference by the machine-learning server entity 150 combined with local training and/or inference by the user equipment 20.

According to the present invention, the (specific) user equipment machine-learning location selection policy (information) 400/401 might be abbreviated by UMLLSP, and its application, or use, especially and advantageously allows that an operator (especially the network operator of the telecommunications network 100) decides with certain policies _{[TS1]} how the UE shall deal with machine-learning tasks; for example, whether machine-learning tasks (like, e.g., training, inference, validation etc.) shall be done on the user equipment 20 (i.e. on the local device), or shall, rather, be done in an edge cloud (i.e. in the machine-learning server entity 150). According to the present invention, it is, hence, advantageously possible that these policies (i.e. the content of the (specific) user equipment machine-learning location selection policy (information) 400/401) are able to be provisioned by the operator (e.g. of the telecommunications network 100) in a network function or service, e.g. the policy and charging function 121, based on different use case scenarios and dependencies. Thereby, the network operator is advantageously able to benefit not only technically (by means of exercising more or less full control regarding the policy to be implemented regarding artificial intelligence/machine-learning) but also from a business perspective.

For example, it is advantageously possible, according to the present invention, that device type (of the user equipment 20) is able to be taken into consideration when artificial intelligence/machine-learning tasks are conducted: Some device types are not (or might not be) able to conduct machine-learning tasks due to limited hardware and/or software capabilities. By means of applying, or using, the (specific) user equipment machine-learning location selection policy (information) 400/401, these devices (user equipments 20) can be offered to offload the machine-learning tasks (especially towards the machine-learning server entity 150).

It is of especially importance, according to the present invention, that regarding protocol relevant tasks, e.g. channel coding, or the use of codecs, the operator (or network operator of the telecommunications network 100) is able to check the model against proper functioning (especially at the edge); additionally, it is advantageously possible for the operator (or network operator of the telecommunications network 100) to enforce the training in the edge cloud (or machine-learning server entity 150), thereby especially having full control over the model, model split for inference etc. _{[TS2]}

It is furthermore advantageously possible according to the present invention to realize an especially low-layer app dependency: Machine learning in the lower protocol stacks typically require low latency and at least inference probably needs to be done locally, i.e. in the user equipment 20. However, in many applications, low latency is not absolutely required and request/response mechanisms to operator machine-learning edge clouds (i.e. the machine-learning server entity 150) does not necessarily lead to a lower user or customer experience. Especially the following scenarios are possible according to the present invention:
In a first possible alternative, no operator control is exerted: Many OTT applications are OTT applications that do not require operator support; this especially relate to speech apps, image recognition etc. In these cases, the (network) operator may not control the machine-learning tasks as this is done completely over the top. However, application providers need infrastructure and all functions in order to realize such machine-learning tasks;
In a second possible alternative, a business-to-business (B2B) approach is realized; especially this relates to OTT applications needing heavy capacity for some machine-learning trainings or inferences. In this situation, the network operator (of the telecommunications network 100) might offer scaling infrastructure and offer the OTT (application) providers a sort of microservice for all relevant machine-learning tasks; such providers, or OTT providers, are then able to buy the network infrastructure option to utilize machine-learning operations completely via the (network) operator.
In a third possible alternative, especially taking into account future 6G requirements, e.g. machine-learning models are able to be applied, such models being potentially based on protocol data (federated learning of models based on billiions of requests and responses (of a plurality of user equipments) - e.g. in order to derive a large language model which predicts the protocol outputs based on protocol inputs).

As described with respect to Figures 3 and 4, according to the present invention, e.g. the policy and charging function 121 provides policies towards the access and mobility management function 122, which indicates, to the user equipment 20, the expected behaviour to apply (or to fulfil) in case that user equipment-initiated machine learning training and/or inference shall be done.

Regarding the interface between the user equipment 20 (or the user equipment machine-learning agent 25) and the machine-learning server entity 150 (especially an edge cloud system), some data control plane and user plane actions need to be considered, such as, e.g., the Authentication against AI edge cloud system (Al training/inference server), the Data control plane and/or the Data user plane, transfer of UE training data to the AI edge cloud system (server).

The data control plane especially comprises:
-- use case type ID,
-- transaction Identifier,
-- meta data about the data transfer,
-- meta data about the data contents,
-- model specifics.

The data user plane, especially relating to the transfer of user equipment training data to the artificial intelligence/machine-learning edge cloud system (server), especially comprises:
-- bearer setup and transfer according to the key performance indicators,
-- trained model, model meta data retrieval (hyperparameter, gradients etc.).

_{[TS3]} Hence, according to the present invention, it is advantageously possible that network operators of telecommunications networks 100, especially mobile communication networks, are able to control very critical artificial intelligence/machine-learning tasks relevant, and this for the network functioning and/or in order to enhance customer experience.

Furthermore, it is advantageously possible according to the present invention that network operators of telecommunications network 100 offer business to application providers as strategic enabler for all tasks that are relevant for artificial intelligence/machine-learning operations, especially including user equipment training and inference behaviour.

## Claims

1. Method for transmitting and/or using a user equipment machine-learning location selection policy information (400) when operating a user equipment (20), or when operating a user equipment (20) connected to a telecommunications network (100),
wherein the user equipment (20) comprises a user equipment machine-learning agent (25), the user equipment machine-learning agent (25) being configured to interact with a machine-learning server entity (150) in order to perform machine-learning operations involving the machine-learning server entity (150) solely or involving the user equipment (20) solely or involving both the machine-learning server entity (150) and the user equipment (20), wherein, in order to transmit and/or in order to use a specific user equipment machine-learning location selection policy information (401), the method comprises the following steps:
-- in a first step, the user equipment (20) comprises or receives the specific user equipment machine-learning location selection policy information (401) to be evaluated and/or to be applied by the user equipment machine-learning agent (25),
-- in a second step, the user equipment machine-learning agent (25) and the machine-learning server entity (150) interact in accordance with a machine-learning interface (155) for control plane data and user plane data.

2. Method according to claim 1, wherein the machine-learning server entity (150) is part of and/or interacts with an artificial intelligence or machine-learning edge cloud system.

3. Method according to one of the preceding claims, wherein the specific user equipment machine-learning location selection policy information (401) is transmitted using non-access stratum communication between, on the one hand, the telecommunications network (100), especially the policy and charging function (121) and/or the access and mobility management function (122) of the telecommunications network (100), and, on the other hand, the user equipment (20) or the user equipment machine-learning agent (25).

4. Method according to one of the preceding claims, wherein the machine-learning interface (155) provides one out of the following functions or functionalities or provides a plurality of the following functions or functionalities:
-- authentication of the user equipment (20) against the machine-learning server entity (150) and/or against the artificial intelligence or machine-learning edge cloud system;
-- authentication of the user equipment machine-learning agent (25) against the machine-learning server entity (150) and/or against the artificial intelligence or machine-learning edge cloud system;
-- data control plane functionalities, especially involving the handling of at least one out of the following:
-- use case type identifier information,
-- transaction identifier information,
-- meta data about the data transfer,
-- meta data about the data contens,
-- machine-learning model specifics;
-- data user plane functionalities, especially involving the transfer of user equipment training data to the machine-learning server entity (150) and/or to the artificial intelligence or machine-learning edge cloud system, and especially involving the handling of at least one out of the following:
-- bearer setup and transfer according to key performance indicators,
-- trained model, model meta data retrieval, especially hyperparameter information and/or gradient information.

5. Method according to one of the preceding claims, wherein the specific user equipment machine-learning location selection policy information (401) is applied, or not applied, by the user equipment (20) or by the user equipment machine-learning agent (25), depending on the content of the specific user equipment machine-learning location selection policy information (401).

6. Method according to one of the preceding claims, wherein the specific user equipment machine-learning location selection policy information (401) determines the interaction between the user equipment machine-learning agent (25) and the machine-learning server entity (150), wherein at least parts of the specific user equipment machine-learning location selection policy information (401), or of its contents, are stored in or provisioned by the policy and charging function of the telecommunications network (100).

7. Method according to one of the preceding claims, wherein the content of the specific user equipment machine-learning location selection policy information (401) and/or the interaction of the user equipment machine-learning agent (25) and the machine-learning server entity (150) refers to or influences protocol layers of the telecommunications network (100).

8. User equipment (20) for receiving and/or using a user equipment machine-learning location selection policy information (400) when being operated, or when being operated in connection to a telecommunications network (100), wherein the user equipment (20) comprises a user equipment machine-learning agent (25), the user equipment machine-learning agent (25) being configured to interact with a machine-learning server entity (150) in order to perform machine-learning operations involving the machine-learning server entity (150) solely or involving the user equipment (20) solely or involving both the machine-learning server entity (150) and the user equipment (20), wherein, in order to receive and/or in order to use a specific user equipment machine-learning location selection policy information (401), the user equipment (20) is configured such that:
-- the user equipment (20) comprises or receives the specific user equipment machine-learning location selection policy information (401) to be evaluated and/or to be applied by the user equipment machine-learning agent (25),
-- the user equipment machine-learning agent (25) interacts with the machine-learning server entity (150) in accordance with a machine-learning interface (155) for control plane data and user plane data.

9. System or telecommunications network (100) for transmitting and/or using a user equipment machine-learning location selection policy information (400) when operating a user equipment (20), or when operating a user equipment (20) connected to a telecommunications network (100),
wherein the user equipment (20) comprises a user equipment machine-learning agent (25), the user equipment machine-learning agent (25) being configured to interact with a machine-learning server entity (150) in order to perform machine-learning operations involving the machine-learning server entity (150) solely or involving the user equipment (20) solely or involving both the machine-learning server entity (150) and the user equipment (20), wherein, in order to transmit and/or in order to use a specific user equipment machine-learning location selection policy information (401), the system or telecommunications network (100) is configured such that:
-- the user equipment (20) comprises or receives the specific user equipment machine-learning location selection policy information (401) to be evaluated and/or to be applied by the user equipment machine-learning agent (25),
-- the user equipment machine-learning agent (25) and the machine-learning server entity (150) interact in accordance with a machine-learning interface (155) for control plane data and user plane data.

10. Program comprising a computer readable program code which, when executed on a computer and/or on a user equipment (20) and/or on a user equipment machine-learning agent (25) and/or on a machine-learning server entity (150) and/or on a network node of a telecommunications network (100), or in part on the user equipment (20) and/or in part on the user equipment machine-learning agent (25) and/or in part on the machine-learning server entity (150) and/or in part on the network node of a telecommunications network (100), causes the computer and/or the user equipment (20) and/or the user equipment machine-learning agent (25) and/or the machine-learning server entity (150) and/or the network node of a telecommunications network (100) to perform a method according one of claims 1 to 7.

11. Computer-readable medium comprising instructions which when executed on a computer and/or on a user equipment (20) and/or on a user equipment machine-learning agent (25) and/or on a machine-learning server entity (150) and/or on a network node of a telecommunications network (100), or in part on the user equipment (20) and/or in part on the user equipment machine-learning agent (25) and/or in part on the machine-learning server entity (150) and/or in part on the network node of a telecommunications network (100), causes the computer and/or the user equipment (20) and/or the user equipment machine-learning agent (25) and/or the machine-learning server entity (150) and/or the network node of a telecommunications network (100) to perform a method according one of claims 1 to 7.

## Amended claims

### Amended claims in accordance with Rule 137(2) EPC.

1. Method for using a user equipment machine-learning location selection policy information (400) when operating a user equipment (20) connected to a telecommunications network (100),
wherein the user equipment (20) comprises a user equipment machine-learning agent (25), the user equipment machine-learning agent (25) being configured to interact with a machine-learning server entity (150) in order to perform machine-learning operations involving the machine-learning server entity (150) solely or involving the user equipment (20) solely or involving both the machine-learning server entity (150) and the user equipment (20),
wherein, in order to use a specific user equipment machine-learning location selection policy information (401), the method comprises the following steps:
-- in a first step, the user equipment (20) comprises or receives the user equipment machine-learning location selection policy information (401) to be applied by the user equipment machine-learning agent (25),
-- in a second step, the user equipment machine-learning agent (25) and the machine-learning server entity (150) interact in accordance with a machine-learning interface (155) for control plane data and user plane data.

2. Method according to claim 1, wherein the machine-learning server entity (150) is part of and/or interacts with an artificial intelligence or machine-learning edge cloud system.

3. Method according to one of the preceding claims, wherein the user equipment machine-learning location selection policy information (401) is transmitted using non-access stratum communication between, on the one hand, the telecommunications network (100), especially the policy and charging function (121) and/or the access and mobility management function (122) of the telecommunications network (100), and, on the other hand, the user equipment (20) or the user equipment machine-learning agent (25).

4. Method according to one of the preceding claims, wherein the machine-learning interface (155) provides one out of the following functions or functionalities or provides a plurality of the following functions or functionalities:
-- authentication of the user equipment (20) against the machine-learning server entity (150) and/or against the artificial intelligence or machine-learning edge cloud system;
-- authentication of the user equipment machine-learning agent (25) against the machine-learning server entity (150) and/or against the artificial intelligence or machine-learning edge cloud system;
-- data control plane functionalities, especially involving the handling of at least one out of the following:
-- use case type identifier information,
-- transaction identifier information,
-- meta data about the data transfer,
-- meta data about the data contens,
-- machine-learning model specifics;
-- data user plane functionalities, especially involving the transfer of user equipment training data to the machine-learning server entity (150) and/or to the artificial intelligence or machine-learning edge cloud system, and especially involving the handling of at least one out of the following:
-- bearer setup and transfer according to key performance indicators,
-- trained model, model meta data retrieval, especially hyperparameter information and/or gradient information.

5. Method according to one of the preceding claims, wherein the user equipment machine-learning location selection policy information (401) is applied, or not applied, by the user equipment machine-learning agent (25), depending on the content of the user equipment machine-learning location selection policy information (401).

6. Method according to one of the preceding claims, wherein the user equipment machine-learning location selection policy information (401) determines the interaction between the user equipment machine-learning agent (25) and the machine-learning server entity (150), wherein at least parts of the user equipment machine-learning location selection policy information (401), or of its contents, are stored in or provisioned by the policy and charging function of the telecommunications network (100).

7. Method according to one of the preceding claims, wherein the content of the user equipment machine-learning location selection policy information (401) and/or the interaction of the user equipment machine-learning agent (25) and the machine-learning server entity (150) refers to or influences protocol layers of the telecommunications network (100).

8. User equipment (20) for receiving and/or using a user equipment machine-learning location selection policy information (400) when being operated, or when being operated in connection to a telecommunications network (100),
wherein the user equipment (20) comprises a user equipment machine-learning agent (25), the user equipment machine-learning agent (25) being configured to interact with a machine-learning server entity (150) in order to perform machine-learning operations involving the machine-learning server entity (150) solely or involving the user equipment (20) solely or involving both the machine-learning server entity (150) and the user equipment (20),
wherein, in order to receive and/or in order to use a specific user equipment machine-learning location selection policy information (401), the user equipment (20) is configured such that:
-- the user equipment (20) comprises or receives the specific user equipment machine-learning location selection policy information (401) to be evaluated and/or to be applied by the user equipment machine-learning agent (25),
-- the user equipment machine-learning agent (25) interacts with the machine-learning server entity (150) in accordance with a machine-learning interface (155) for control plane data and user plane data.

9. Telecommunications network (100) for transmitting and/or using a user equipment machine-learning location selection policy information (400) when operating a user equipment (20) connected to the telecommunications network (100), wherein the user equipment (20) comprises a user equipment machine-learning agent (25), the user equipment machine-learning agent (25) being configured to interact with a machine-learning server entity (150) in order to perform machine-learning operations involving the machine-learning server entity (150) solely or involving the user equipment (20) solely or involving both the machine-learning server entity (150) and the user equipment (20),
wherein, in order to transmit and/or in order to use a specific user equipment machine-learning location selection policy information (401), the system or telecommunications network (100) is configured such that:
-- the user equipment (20) comprises or receives the specific user equipment machine-learning location selection policy information (401) to be evaluated and/or to be applied by the user equipment machine-learning agent (25) from the telecommunications network (100),
-- the user equipment machine-learning agent (25) and the machine-learning server entity (150) interact in accordance with a machine-learning interface (155) for control plane data and user plane data.

10. Program comprising a computer readable program code which, when executed on a user equipment machine-learning agent (25) and/or on a machine-learning server entity (150) and/or on a network node of a telecommunications network (100), causes the user equipment machine-learning agent (25) and/or the machine-learning server entity (150) and/or the network node of a telecommunications network (100) to perform a method according one of claims 1 to 7.

11. Computer-readable medium comprising instructions which when executed on a user equipment machine-learning agent (25) and/or on a machine-learning server entity (150) and/or on a network node of a telecommunications network (100), causes the user equipment machine-learning agent (25) and/or the machine-learning server entity (150) and/or the network node of a telecommunications network (100) to perform a method according one of claims 1 to 7.
